# EUROPÄISCHE PATENTSCHRIFT

(11) **EP 4 016 550 B1**
(45) Veröffentlichungstag und Bekanntmachung des Hinweises auf die Patenterteilung: **24.04.2024**
(21) Anmeldenummer: 20214907.6
(22) Anmeldetag: 17.12.2020
(51) Int. Cl.: G21F 5/005, G21F 5/12, G21F 5/10, G21F 5/008

(54) **BEHÄLTER ZUR AUFNAHME VON RADIOAKTIVEN ABFALLSTOFFEN**
CONTAINER FOR RADIOACTIVE WASTE MATERIALS
RÉCIPIENT DE RÉCEPTION DE DÉCHETS RADIOACTIFS

(43) Veröffentlichungstag der Anmeldung: 22.06.2022
(73) Patentinhaber: GNS Gesellschaft für Nuklear-Service mbH, 45127 Essen (DE)
(72) Erfinder: FISCHER, Tobias, 45144 Essen (DE); KLÖHN, Berthold, 58455 Witten (DE); JECH, Benjamin, 44139 Dortmund (DE)
(74) Vertreter: Andrejewski - Honke Patent- und Rechtsanwälte Partnerschaft mbB

(56) Entgegenhaltungen:
- EP-A1- 0 505 269
- US-A- 5 121 849
- US-A1- 2006 188 054

## Beschreibung

Die Erfindung betrifft einen Behälter zur Aufnahme von radioaktiven Abfallstoffen, insbesondere zur Aufnahme von abgebrannten Brennelementen, mit einem Behältermantel, mit einem mit dem Behältermantel verbundenen Behälterboden und mit zumindest einem Behälterdeckel, wobei der Behälterdeckel zumindest eine im deckeloberseitigen Randbereich angeordnete Verriegelungsausnehmung aufweist, wobei in der Verriegelungsausnehmung zumindest ein Verriegelungselement angeordnet ist bzw. angeordnet werden kann. Die Erfindung betrifft weiterhin ein Behälteraggregat aus einem Kanister und einem Transport- und/oder Lagerbehälter.

Behälter der eingangs genannten Art sind aus der Praxis in unterschiedlichen Ausführungsformen grundsätzlich bekannt.

Die EP-A-0 505 269 beschreibt einen Behälter zur Aufnahme von radioaktiven Abfallstoffen mit ringförmigem Adapter E und Adaptertür F um einen Behältermantel zu verschließen. Die US-A-5 121 849 lehrt einen Behälter zur Aufnahme von radioaktiven Abfallstoffen bei dem Verriegelungsplatten im Mittelabschnitt zwischen Deckeloberseite und Deckelunterseite ohne Formschluss in Öffnungen im Behältermantel eingreifen.

Die US-A-2006/188054 lehrt einen Behälter zum Transport radioaktiver Abfallstoffe mit Behältermantel und Behälterdeckel, der durch eine umlaufende ringförmige Nut und mittels Verriegelungsklötzen verschließbar ist.

Es sind insbesondere Kanister bekannt, die unter Wasser mit abgebrannten Brennelementen beladen und anschließend mit einem Deckel verschlossen werden. Die Kanister werden in der Folge in einem Transport- und/oder Lagerbehälter aufgenommen. Der Lastanschlagpunkt für die dazu erforderliche Überführung der Kanister in die Transport- und/oder Lagerbehälter ist aufgrund der vertikalen Handhabung der Kanister in der Regel an der Deckeloberseite des Kanisters vorgesehen. Die Verbindung von Deckel und Kanister muss dementsprechend für die bei der Überführung in die Transport- und/oder Lagerbehälter wirkende Belastung ausgelegt sein. Aus der Praxis ist es daher bekannt, eine Schweißnaht zwischen dem Kanisterdeckel und dem Kanistermantel vorzusehen. Die Verschweißung des Kanisterdeckels mit dem Kanistermantel hat sich grundsätzlich bewährt. Üblicherweise wird auch die Dichtheit des Kanisters durch einen Schweißring als Dichtschweißnaht realisiert. Derartige Schweißverbindungen bzw. Dichtschweißnähte können üblicherweise die zulässigen Leckageraten einhalten und haben sich daher ebenfalls grundsätzlich bewährt.

Die aus der Praxis bekannten Behälter bzw. Kanister können aufgrund der Schweißnähte aber nur mit großem Aufwand wieder geöffnet werden. Dies ist insbesondere im Falle einer erforderlichen Umlagerung der Brennelemente nachteilhaft. Eine zerstörungsfreie Wiederöffnung der aus der Praxis bekannten Kanister, die verschweißt werden, ist nicht möglich. Es sind zwar grundsätzlich Verschraubungen für Behälterdeckel von Behältern zur Aufnahme von radioaktiven Abfallstoffen bekannt, diese Verschraubungen erfordern aber eine hohe Wandstärke der Behälter bzw. der Behältermäntel, die insbesondere für dünnwandige Behälter, wie beispielsweise Kanister, nicht realisierbar ist. - Insoweit besteht Verbesserungsbedarf.

Demgegenüber liegt der Erfindung das technische Problem zugrunde, einen Behälter der eingangs genannten Art anzugeben, der einfach und funktionssicher verschlossen werden kann, nichtsdestoweniger eine optimale Dichtheit aufweist und die zulässigen Leckageraten einhält, der einfach zu handhaben ist und der darüber hinaus mit verhältnismäßig geringem Aufwand sicher und zerstörungsfrei wieder geöffnet werden kann.

Zur Lösung dieses technischen Problems lehrt die Erfindung einen Behälter zur Aufnahme von radioaktiven Abfallstoffen, insbesondere zur Aufnahme von abgebrannten Brennelementen, mit einem Behältermantel, mit einem mit dem Behältermantel verbundenen Behälterboden und mit zumindest einem Behälterdeckel, wobei der Behälterdeckel zumindest eine im deckeloberseitigen Randbereich angeordnete Verriegelungsausnehmung aufweist, wobei in der Verriegelungsausnehmung zumindest ein Verriegelungselement angeordnet ist bzw. angeordnet werden kann. Der erfindungsgemäße Behälter ist dadurch gekennzeichnet, dass das Verriegelungselement zumindest einen in Richtung des Behältermantels orientierten Formschlussfortsatz aufweist, der im verriegelten Zustand des Behälterdeckels in eine komplementäre Formschlussausnehmung des Behältermantels eingreift, wobei die Formschlussausnehmung im deckelseitigen Randbereich des Behältermantels angeordnet 2. ist und wobei die zumindest eine Formschlussausnehmung als den Behältermantel durchgreifende Formschlussöffnung ausgebildet ist.

Es liegt im Rahmen der Erfindung, dass der Behälterdeckel im deckeloberseitigen Randbereich angeordnete Verriegelungsausnehmungen aufweist, in denen jeweils zumindest ein Verriegelungselement angeordnet ist bzw. angeordnet werden kann. Mit dem Begriff verriegelter Zustand des Behälterdeckels ist im Rahmen der Erfindung insbesondere derjenige Zustand gemeint, in dem der zumindest eine Formschlussfortsatz des zumindest einen Verriegelungselementes in die zumindest eine komplementäre Formschlussausnehmung des Behältermantels eingreift, sodass eine Formschlusswechselwirkung zwischen dem Formschlussfortsatz und der Formschlussausnehmung realisiert ist. Es liegt im Rahmen der Erfindung, dass der Behälterdeckel in seinem verriegelten Zustand aufgrund der Formschlusswechselwirkung des zumindest einen Formschlussfortsatzes des Verriegelungselementes mit der zumindest einen Formschlussausnehmung des Behältermantels formschlüssig mit dem Behältermantel verbunden ist. Im verriegelten Zustand des Behälterdeckels ist der zumindest eine Formschlussfortsatz des Verriegelungselementes zweckmäßigerweise formschlüssig in der komplementären Formschlussausnehmung des Behältermantels aufgenommen, insbesondere in die Formschlussausnehmung eingepasst.

Gemäß einer bevorzugten Ausführungsform des erfindungsgemäßen Behälters ist in dem Behälterinnenraum des Behälters ein Tragkorb zur Aufnahme von abgebrannten Brennelementen angeordnet. Der Tragkorb weist vorzugsweise einzelne Aufnahmerohre für die Brennelemente auf. Es liegt weiterhin im Rahmen der Erfindung, dass der Behälterboden und der Behältermantel einstückig miteinander verbunden sind oder über zumindest eine Schweißverbindung miteinander verbunden sind.

Eine besonders bevorzugte Ausführungsform der Erfindung ist dadurch gekennzeichnet, dass der Behälter ein Kanister ist. Der Kanister wird vorzugsweise unter Wasser mit abgebrannten Brennelementen beladen, anschließend mit dem Behälterdeckel verschlossen und dann in einen Transport- und/oder Lagerbehälter überführt. Grundsätzlich kann der Kanister auch trocken beladen werden.

Es liegt im Übrigen im Rahmen der Erfindung, dass der erfindungsgemäße Behälter bzw. dessen Behältermantel zylinderförmig ausgebildet ist. Vorzugsweise ist der erfindungsgemäße Behälter im Querschnitt rund, bevorzugt kreisrund. Radiale Richtung des Behälters meint im Rahmen der Erfindung zweckmäßigerweise quer, insbesondere senkrecht zur Längsmittelachse L eines vorzugsweise im Querschnitt rund bzw. kreisrund ausgebildeten Behälters. Grundsätzlich liegen auch andere Behältergeometrien im Rahmen der Erfindung, beispielsweise eckige, insbesondere rechteckige und dergleichen Querschnittsgeometrien des Behälters.

Erfindungsgemäß weist der Behälterdeckel zumindest eine Verriegelungsausnehmung auf, die im deckeloberseitigen Randbereich angeordnet ist. In der zumindest einen Verriegelungsausnehmung ist zumindest ein Verriegelungselement angeordnet, das zumindest einen in Richtung des Behältermantels bzw. des Deckelaußenrandes orientierten Formschlussfortsatz aufweist. Die Orientierung des Formschlussfortsatzes des Verriegelungselementes bezieht sich insbesondere auf den Zustand, in dem das Verriegelungselement in der Verriegelungsausnehmung angeordnet ist. Im Rahmen der Erfindung ist der Formschlussfortsatz somit nicht Teil des Behälterdeckels selbst, sondern Teil des Verriegelungselementes, das erfindungsgemäß in der Verriegelungsausnehmung angeordnet ist bzw. angeordnet werden kann. Zweckmäßigerweise ist der Behälterdeckel mittels des zumindest einen Verriegelungselementes und insbesondere mittels des zumindest einen Formschlussfortsatzes des Verriegelungselementes mit dem Behältermantel verbindbar, insbesondere formschlüssig verbindbar. Es empfiehlt sich, dass der Behälterdeckel in seinem verriegelten Zustand mittels des Formschlussfortsatzes des zumindest einen Verbindungselementes mit dem Behältermantel verbunden ist und zwar aufgrund der Formschlusswechselwirkung des Formschlussfortsatzes mit der zumindest einen komplementären Formschlussausnehmung.

Es liegt im Rahmen der Erfindung, dass das Verriegelungselement im unverschlossenen Zustand des Behälters in der Verriegelungsausnehmung verschiebbar ist. Besonders bevorzugt ist das Verriegelungselement im unverschlossenen Zustand des Behälters quer, insbesondere senkrecht zur Längsmittelachse L des Behälters, vorzugsweise in radialer Richtung des Behälters in der Verriegelungsausnehmung verschiebbar, sodass es von einer Öffnungsposition in eine Formschlussposition und zurück überführbar ist. Unverschlossener Zustand des Behälters meint im Rahmen der Erfindung insbesondere den Zustand, in dem das zumindest eine Verriegelungselement noch nicht vollständig in seiner Formschlussposition fixiert ist. Vollständig verschlossener Zustand des Behälters meint demgegenüber denjenigen Zustand, in dem der Behälterdeckel mit dem Behältermantel verbunden ist, insbesondere mittels des Verriegelungselementes bzw. der Verriegelungselemente formschlüssig verbunden ist und in dem das zumindest eine Verriegelungselement in seiner Formschlussposition fixiert ist.

Die Angabe senkrecht zur Längsmittelachse L des Behälters bezieht sich im Rahmen der Erfindung im Übrigen insbesondere auf den vertikalen Aufstellzustand des Behälters, in dem der Behälterboden auf einem Untergrund aufsteht und der Behälterdeckel oben angeordnet ist. In diesem vertikalen Aufstellzustand ist die Längsmittelachse des Behälters vertikal orientiert. Das zumindest eine Verriegelungselement bzw. die Verriegelungselemente ist/sind im unverschlossenen Zustand des Behälters zweckmäßigerweise senkrecht zur Längsmittelachse des Behälters in der Verriegelungsausnehmung bzw. in den Verriegelungsausnehmungen verschiebbar. Somit ist die Verriegelungsausnehmung vorzugsweise hinsichtlich ihrer Abmessungen bzw. ihres Durchmessers größer als das Verriegelungselement. Wenn der erfindungsgemäße Behälter gemäß bevorzugter Ausführungsform als Zylinder mit kreisrundem Querschnitt ausgebildet ist, kann das zumindest eine Verriegelungselement im unverschlossenen Zustand des Behälters zweckmäßigerweise in radialer Richtung des Behälters verschoben werden. Durch die Verschiebung des zumindest einen Verriegelungselementes quer, insbesondere senkrecht zur Längsmittelachse des Behälters, insbesondere in radialer Richtung des Behälters, ist das zumindest eine Verriegelungselement bevorzugt von einer Öffnungsposition in eine Formschlussposition und zurück überführbar.

Es liegt im Rahmen der Erfindung, dass der Formschlussfortsatz des zumindest einen Verriegelungselementes in der Öffnungsposition nicht in die komplementäre Formschlussausnehmung des Behältermantels eingreift. Zweckmäßigerweise greift der Formschlussfortsatz des Verriegelungselementes nach der Verschiebung des Verriegelungselementes in der Verriegelungsausnehmung in Richtung der Behälteraußenseite formschlüssig in die komplementäre Formschlussausnehmung ein und befindet sich dann in einer Formschlussposition. Wenn sich das zumindest eine Verriegelungselement in der Formschlussposition befindet, insbesondere wenn sich alle Verriegelungselemente in der Formschlussposition befinden, befindet sich der Behälterdeckel im verriegelten Zustand. In der Öffnungsposition kann der Behälterdeckel empfohlenermaßen von dem Behälter abgenommen werden und befindet sich im unverriegelten Zustand. In der Formschlussposition kann der Behälterdeckel zweckmäßigerweise nicht von dem Behältermantel abgenommen werden und ist darüber hinaus vorzugsweise verdrehsicher mit dem Behältermantel verbunden. Die vorzugsweise vorgesehene Verschiebbarkeit des Verriegelungselementes bzw. der Verriegelungselemente in der Verriegelungsausnehmung bzw. in den Verriegelungsausnehmungen ermöglicht somit ein hin- und herschalten zwischen der Formschlussposition und der Öffnungsposition, sodass insbesondere eine Wiederöffnung des Behälters möglich ist.

Es ist möglich, dass der Behälter sich bereits durch die Überführung bzw. die Anordnung der Verriegelungselemente in der Formschlussposition und somit in seinem verriegelten Zustand im vollständig verschlossenen Zustand befindet, in dem die Verriegelungselemente in ihrer Formschlussposition fixiert sind. Gemäß einer sehr bevorzugten Ausführungsform ist zusätzlich ein Halteelement und/oder ein Fixierungselement vorgesehen, um das Verriegelungselement in seiner Formschlussposition zu halten und den vollständig verschlossenen Zustand des Behälterdeckels herzustellen. Dies wird untenstehend noch näher erläutert.

Eine bevorzugte Ausführungsform des erfindungsgemäßen Behälters ist dadurch gekennzeichnet, dass der Behälter einen den Innenumfang des Behältermantels umlaufenden Auflageabsatz aufweist, auf den der Behälterdeckel aufgesetzt werden kann. Zweckmäßigerweise ist der Auflageabsatz im deckelseitigen Randbereich des Behältermantels und bevorzugt unterhalb der zumindest einen Formschlussausnehmung angeordnet. Der Behälterdeckel weist zweckmäßigerweise eine komplementäre Auflageschulter zur Auflage auf dem Auflageabsatz auf. Der Auflageabsatz umläuft den Innenumfang des Behältermantels vorzugsweise zu mindestens 80 %, bevorzugt zu mindestens 90 %. Es ist bevorzugt, dass der den Innenumfang umlaufende Auflageabsatz bereichsweise unterbrochen ist, um das Einführen eines Tragkorbes zu ermöglichen.

Es liegt im Rahmen der Erfindung, dass die Deckeloberseite des Behälterdeckels in Bezug auf das obere Ende des Behältermantels einen Überstand aufweist, der das obere Ende des Behältermantels überragt, wenn der Behälterdeckel auf den Behältermantel aufgesetzt ist und insbesondere mit seiner Auflageschulter auf den Auflageabsatz des Behältermantels aufgesetzt ist. Zweckmäßigerweise beträgt die Höhendifferenz bzw. die Höhe des Überstandes zwischen 0,5 und 3 mm, insbesondere zwischen 0,8 und 2,5 mm. Dieser Ausführungsform mit einem Überstand des Behälterdeckels liegt die Erkenntnis zugrunde, dass bei einem Deckelflachfall die aus dem Behälterinhalt wirkende Kraft über den Deckel abgeleitet werden kann, beispielsweise auf einen Rückhaltering eines den Behälter umgebenden Transport- und/oder Lagerbehälters. Auf diese Weise wird der Behältermantel und das Verschlusssystem bei einem Deckelflachfall nicht zusätzlich belastet. Dieser Ausführungsform kommt im Rahmen der Erfindung ganz besondere Bedeutung zu. Grundsätzlich ist es aber auch möglich, dass die Deckeloberseite des Behälterdeckels mit dem oberen Ende des Behältermantels fluchtet, wenn der Behälterdeckel auf den Behältermantel aufgesetzt ist und insbesondere mit seiner Auflageschulter auf den Auflageabsatz des Behältermantels aufgesetzt ist. Es ist möglich, dass der Behälterdeckel an seiner dem Behälterinnenraum zugewandten Deckelunterseite im deckelunterseitigen Randbereich eine den Umfang des Behälterdeckels umlaufende Fase bzw. Schrägfläche aufweist, die bevorzugt zwischen der Deckelunterseite und dem Deckelaußenrand angeordnet ist. Die Fase bzw. Schrägfläche erleichtert das Einführen des Deckels in den Behältermantel.

Gemäß einer besonders empfohlenen Ausführungsform der Erfindung sind mindestens zwei, insbesondere mindestens drei, vorzugsweise mindestens vier, bevorzugt mindestens fünf Verriegelungsausnehmungen im deckeloberseitigen Randbereich des Behälterdeckels vorgesehen, die zweckmäßigerweise über den Umfang des Behälterdeckels verteilt angeordnet sind, vorzugsweise gleichmäßig verteilt angeordnet sind und in denen besonders bevorzugt jeweils zumindest ein Verriegelungselement angeordnet ist bzw. angeordnet werden kann. Eine besonders empfohlene Ausführungsform des erfindungsgemäßen Behälters ist dadurch gekennzeichnet, dass eine Mehrzahl von Verriegelungsausnehmungen, insbesondere mindestens sechs, vorzugsweise mindestens acht, bevorzugt mindestens zehn, besonders bevorzugt mindestens zwölf und ganz besonders bevorzugt mindestens vierzehn Verriegelungsausnehmungen im deckeloberseitigen Randbereich vorgesehen sind, die über den Umfang des Behälterdeckels verteilt, vorzugsweise gleichmäßig verteilt, angeordnet sind und in denen besonders bevorzugt jeweils zumindest ein Verriegelungselement angeordnet ist bzw. angeordnet werden kann. Es liegt grundsätzlich im Rahmen der Erfindung, dass nicht in jeder Verriegelungsausnehmung ein Verriegelungselement angeordnet ist, sodass grundsätzlich leere Verriegelungsausnehmungen verbleiben können.

Es empfiehlt sich, dass der Behältermantel mindestens zwei, insbesondere mindestens drei, vorzugsweise mindestens vier, bevorzugt mindestens fünf Formschlussausnehmungen aufweist, die über den Umfang des Behältermantels verteilt, vorzugsweise gleichmäßig verteilt, angeordnet sind. Gemäß einer besonders empfohlenen Ausführungsform weist der Behältermantel eine Mehrzahl von Formschlussausnehmungen, insbesondere mindestens sechs, vorzugsweise mindestens acht, bevorzugt mindestens zehn, besonders bevorzugt mindestens zwölf und ganz besonders bevorzugt mindestens vierzehn Formschlussausnehmungen auf, die über den Umfang des Behältermantels verteilt, vorzugsweise gleichmäßig verteilt, angeordnet sind. Es liegt im Rahmen der Erfindung, dass die Anzahl der Formschlussausnehmungen des Behältermantels der Anzahl der Verriegelungsausnehmungen und/oder der Verriegelungselemente und somit der Anzahl der an den Verriegelungselementen angeordneten Formschlussfortsätze entspricht. Grundsätzlich ist es aber auch möglich, dass die Anzahl der Verriegelungsausnehmungen größer oder kleiner ist als die Anzahl der Formschlussausnehmungen.

Es ist bevorzugt, dass der zumindest eine Formschlussfortsatz einstückig an das Verriegelungselement angeformt ist. Zweckmäßigerweise ist der zumindest eine Formschlussfortsatz als einstückig an das Verriegelungselement angeformter und in Richtung des Behältermantels vorkragender Vorsprung ausgebildet. Es liegt im Rahmen der Erfindung, dass das Verriegelungselement mit dem daran angeformten Formschlussfortsatz im Querschnitt L-förmig bzw. im Wesentlichen L-förmig ausgebildet ist. Empfohlenermaßen bildet dann der horizontal orientierte Abschnitt der L-Form den Formschlussfortsatz bzw. weist den Formschlussfortsatz auf. Gemäß einer bevorzugten Ausführungsform der Erfindung ist der zumindest eine Formschlussfortsatz als vorkragender, in der Draufsicht rechteckförmiger Vorsprung, vorzugsweise als rechteckförmiger Vorsprung mit abgerundeten Ecken ausgebildet.

Nach einer sehr bevorzugten Ausführungsform der Erfindung ist die Verriegelungsausnehmung zumindest bereichsweise zu dem Deckelaußenrand bzw. dem Behältermantel hin offen ausgebildet, vorzugsweise zumindest in dem dem Formschlussfortsatz des Verriegelungselementes zugeordneten Bereich zu dem Deckelaußenrand hin offen ausgebildet und bevorzugt entlang ihrer gesamten vertikalen Höhe bzw. im Wesentlichen entlang ihrer gesamten vertikalen Höhe zu dem Deckelaußenrand hin offen ausgebildet. Zweckmäßigerweise ist die zumindest eine Verriegelungsausnehmung als zu dem Deckelaußenrand hin offen ausgebildete Ausfräsung ausgestaltet. Besonders bevorzugt ist die zumindest eine Verriegelungsausnehmung im Querschnitt L-förmig ausgebildet, wobei zweckmäßigerweise die offene Seite der L-Form in Richtung des Deckelaußenrandes orientiert ist. Die zumindest bereichsweise zu dem Deckelaußenrand bzw. zu dem Behältermantel hin offen ausgebildete Verriegelungsausnehmung ermöglicht insbesondere, dass der Formschlussfortsatz des zumindest einen Verriegelungselementes in der Formschlussposition über den Deckelaußenrand hinausragen kann und in Formschlusswechselwirkung mit der komplementären Formschlussausnehmung des Behältermantels treten kann.

Die Erfindung ist dadurch gekennzeichnet, dass die zumindest eine Formschlussausnehmung als den Behältermantel durchgreifende Formschlussöffnung ausgebildet ist. Es liegt in diesem Zusammenhang im Rahmen der Erfindung, dass der zumindest eine Formschlussfortsatz im verriegelten Zustand des Behälterdeckels nicht über die Außenseite des Behältermantels hinausragt und insbesondere mit der Außenseite des Behältermantels fluchtet. Im Rahmen einer solchen Ausführungsform greift der Formschlussfortsatz des zumindest einen Verriegelungselementes in der Formschlussposition in die komplementäre Formschlussausnehmung des Behältermantels ein und ragt dabei nicht über den Außenrand des Behältermantels hinaus bzw. fluchtet mit dem Außenrand des Behältermantels. Erfindungsgemäß ist mittels des Verriegelungselementes bzw. der Verriegelungselemente eine formschlüssige Verbindung zwischen dem Behälterdeckel und dem Behältermantel herstellbar. Es liegt im Rahmen der Erfindung, dass zusätzlich Dichtungsmaßnahmen für die Abdichtung zwischen Behälterdeckel und Behältermantel vorgesehen sind. Es ist bevorzugt, dass zwischen dem Behältermantel und dem Behälterdeckel zumindest eine Hauptdichtung angeordnet ist. Die Hauptdichtung umläuft den Innenumfang des Behältermantels empfohlenermaßen zumindest teilweise, vorzugsweise vollständig bzw. im Wesentlichen vollständig. Die zumindest eine Hauptdichtung ist vorzugsweise als einen Innenumfang des Behältermantels und/oder einen Außenumfang des Behälterdeckels vollständig bzw. im Wesentlichen vollständig umlaufender Dichtungsring ausgebildet. Es empfiehlt sich, dass die zumindest eine Hauptdichtung eine Metalldichtung ist, die vorzugsweise auf Basis zumindest eines Metalls ausgebildet ist und insbesondere aus zumindest einem Metall besteht bzw. im Wesentlichen besteht. Dieser Ausführungsform kommt im Rahmen der Erfindung besondere Bedeutung zu. Grundsätzlich ist es auch möglich, dass die zumindest eine Hauptdichtung auf Basis zumindest eines Kunststoffes, beispielsweise auf Basis zumindest eines elastomeren Kunststoffes ausgebildet ist und insbesondere aus zumindest einem elastomeren Kunststoff besteht bzw. im Wesentlichen besteht.

Es hat sich bewährt, dass die zumindest eine Hauptdichtung in Richtung quer, insbesondere senkrecht zur Längsmittelachse des Behälters, vorzugsweise in radialer Richtung des Behälters unterhalb des zumindest einen Verriegelungselementes angeordnet ist. Gemäß besonders empfohlener Ausführungsform ist die zumindest eine Hauptdichtung sowohl in Richtung quer, insbesondere senkrecht zur Längsmittelachse des Behälters, vorzugsweise in radialer Richtung des Behälters, als auch in axialer Richtung des Behälters unterhalb des zumindest einen Verriegelungselementes angeordnet. Die axiale Richtung des Behälters bezieht sich im Rahmen der Erfindung insbesondere auf den vertikalen Aufstellzustand des Behälters und zweckmäßigerweise auf die Längsmittelachse des Behälters. Dieser Ausführungsform liegt die Erkenntnis zugrunde, dass durch die quer, insbesondere senkrecht zur Längsmittelachse des Behälters, vorzugsweise in radialer Richtung des Behälters unterhalb des zumindest einen Verriegelungselementes und/oder axial unterhalb des zumindest einen Verriegelungselementes angeordnete Hauptdichtung eine geometrisch kompakte Lösung der Dichtungsanordnung realisiert werden kann. Bei den aus der Praxis bekannten Maßnahmen ist die Dichtung üblicherweise radial versetzt zu den Verriegelungselementen bzw. Verschraubungen angeordnet.

Es ist bevorzugt, dass der Behälterdeckel eine den Außenumfang des Behälterdeckels umlaufende Hauptdichtungsschulter aufweist, unter der die zumindest eine Hauptdichtung im vollständig verschlossenen Zustand des Behälters angeordnet ist. Zweckmäßigerweise ist an dem Behältermantel, den Innenumfang des Behältermantels umlaufend ein Hauptdichtungsabsatz vorgesehen. Gemäß einer bevorzugten Ausführungsform der Erfindung ist die zumindest eine Hauptdichtung zwischen dem Hauptdichtungsabsatz des Behältermantels und der Hauptdichtungsschulter des Behälterdeckels angeordnet bzw. zwischengeschaltet. Der Hauptdichtungsabsatz des Behältermantels befindet sich zweckmäßigerweise im deckelseitigen Randbereich des Behältermantels und insbesondere in axialer Richtung des Behälters unterhalb der zumindest einen Formschlussausnehmung. Die Hauptdichtungsschulter des Behälterdeckels befindet sich insbesondere in axialer Richtung des Behälters unterhalb der zumindest einen Verriegelungsausnehmung des Behälterdeckels. Es ist möglich, dass die Hauptdichtungsschulter und der Hauptdichtungsabsatz als separate Hauptdichtungsschulter und als separater Hauptdichtungsabsatz ausgebildet sind.

Gemäß einer alternativen bevorzugten Ausführungsform liegt es im Rahmen der Erfindung, dass der Hauptdichtungsabsatz und/oder die Hauptdichtungsschulter dem Auflageabsatz und/oder der Auflageschulter zur Auflage des Behälterdeckels auf dem Behältermantel entsprechen. Im Rahmen einer solchen Ausführungsform ist es bevorzugt, dass der Auflageabsatz einen in radialer Richtung des Behälters äußeren Bereich für die Hauptdichtung und einen in radialer Richtung des Behälters inneren Bereich aufweist, der insbesondere bereichsweise unterbrochen ist und auf dem der Behälterdeckel mit der komplementären Auflageschulter aufgesetzt werden kann. Zweckmäßigerweise ist dann eine zusätzliche Hauptdichtungsschulter des Behälterdeckels vorgesehen, sodass die Hauptdichtung zwischen dem radial äußeren Bereich des Auflageabsatzes und der Hauptdichtungsschulter zwischengeschaltet ist.

Es liegt weiterhin im Rahmen der Erfindung, dass zumindest eine Hilfsdichtung bzw. Prüfdichtung vorgesehen ist, die den Umfang des Behälterdeckels umläuft, insbesondere vollständig umläuft und vorzugsweise als Prüfdichtungsring ausgebildet ist. Zweckmäßigerweise ist die zumindest eine Prüfdichtung in einer Prüfdichtungsnut angeordnet. Es hat sich bewährt, dass die Prüfdichtungsnut in dem Behälterdeckel angeordnet ist, vorzugsweise an dem Deckelaußenrand angeordnet ist und bevorzugt den Außenumfang des Behälterdeckels umläuft und in Richtung des Deckelaußenrandes bzw. des Behältermantels offen ausgebildet ist. Es empfiehlt sich, dass die zumindest eine Prüfdichtung und die zugeordnete Prüfdichtungsnut in axialer Richtung des Behälters oberhalb der Hauptdichtung und unterhalb der zumindest einen Verriegelungsausnehmung angeordnet ist. Empfohlenermaßen ist die zumindest eine Prüfdichtung auf Basis zumindest eines Kunststoffes, insbesondere eines elastomeren Kunststoffes ausgebildet.

Eine bevorzugte Ausführungsform der Erfindung ist dadurch gekennzeichnet, dass das zumindest eine Verriegelungselement im verriegelten Zustand des Behälterdeckels an seiner dem Deckelaußenrand bzw. dem Behältermantel zugeordneten Seite mit dem Deckelaußenrand fluchtet und zweckmäßigerweise mit der Innenseite des Behältermantels wechselwirkt, vorzugsweise an der Innenseite des Behältermantels anliegt. Im Rahmen dieser Ausführungsform steht das zumindest eine Verriegelungselement im verriegelten Zustand des Behälterdeckels bzw. im vollständig verschlossenen Zustand des Behälters an seiner dem Deckelaußenrand bzw. dem Behältermantel zugeordneten Seite empfohlenermaßen in direktem Kontakt zu der Innenseite des Behältermantels. Grundsätzlich liegt es aber auch im Rahmen der Erfindung, dass zwischen dem zumindest einen Verriegelungselement und dem Behältermantel ein Zwischenelement angeordnet ist. Mit der dem Deckelaußenrand bzw. dem Behältermantel zugeordneten Seite des Verriegelungselementes ist hier insbesondere der Abschnitt des Verriegelungselementes gemeint, der nicht mit einem Formschlussfortsatz versehen ist. Im Falle der vorzugsweise vorgesehenen Ausgestaltung des Verriegelungselementes in L-Querschnittform liegt dann zweckmäßigerweise der vertikal orientierte Abschnitt der L-Form an der Innenseite des Behältermantels an und der horizontal orientierte Abschnitt der L-Form weist zweckmäßigerweise den Formschlussfortsatz auf.

Es wurde vorstehend bereits erläutert, dass empfohlenermaßen der Behälterdeckel in seinem verriegelten Zustand bzw. im vollständig verschlossenen Zustand des Behälters aufgrund der Formschlusswechselwirkung des zumindest einen Formschlussfortsatzes mit der zumindest einen Formschlussausnehmung formschlüssig mit dem Behältermantel verbunden ist. Zweckmäßigerweise ist in der zumindest einen Verriegelungsausnehmung zumindest ein Halteelement vorgesehen, dass das Verriegelungselement im vollständig verschlossenen Zustand des Behälters in seiner Formschlussposition hält. Das zumindest eine Halteelement ist vorzugsweise zwischen dem Verriegelungselement und einer Anschlagschulter der Verriegelungsausnehmung angeordnet, insbesondere formschlüssig angeordnet, bevorzugt eingepasst.

Wenn das Verriegelungselement gemäß bevorzugter Ausführungsform der Erfindung durch Verschiebung quer, insbesondere senkrecht zur Längsmittelachse des Behälters, vorzugsweise in radialer Richtung des Behälters in seine Formschlussposition überführt wurde und insbesondere in Richtung der Behälteraußenseite verschoben wurde bzw. verschoben ist, ist zwischen dem Verriegelungselement und der Anschlagschulter der Verriegelungsausnehmung bevorzugt ein Spalt angeordnet. Die Anschlagschulter bildet zweckmäßigerweise in Richtung quer, insbesondere senkrecht zur Längsachse, vorzugsweise in radialer Richtung von der Behälteraußenseite zur Behälterinnenseite hin den rückseitigen Abschluss der Verriegelungsausnehmung. Das zumindest eine Halteelement wird empfohlenermaßen in dem Spalt zwischen der Rückseite des Verriegelungselementes und der Anschlagschulter angeordnet bzw. ist im vollständig verschlossenen Zustand des Behälters in diesem Spalt angeordnet, insbesondere formschlüssig angeordnet und bevorzugt eingepasst. Es hat sich bewährt, dass das zumindest eine Halteelement im vollständig verschlossenen Zustand des Behälters in Richtung von der Behälteraußenseite zur Behälterinnenseite hinter dem zumindest einen Verriegelungselement angeordnet ist. Das zumindest eine Halteelement ist im vollständig verschlossenen Zustand des Behälters zweckmäßigerweise in der Verriegelungsausnehmung fixiert, beispielsweise durch Verschraubung fixiert. Zur Wiederöffnung des Behälters kann das zumindest eine Halteelement wieder aus der Verriegelungsausnehmung entfernt werden und die Verriegelungselemente können von ihrer Formschlussposition in die Öffnungsposition überführt werden.

Nach einer sehr bevorzugten Ausführungsform des erfindungsgemäßen Behälters weist das zumindest eine Verriegelungselement eine Aufnahme, vorzugsweise eine Aufnahmebohrung, für ein Fixierungselement, insbesondere für eine Schraube auf. Empfohlenermaßen weist die Aufnahme bzw. die Aufnahmebohrung ein Innengewinde zur Aufnahme des Fixierungselementes bzw. der Schraube auf. Das Fixierungselement bzw. die Schraube ist im verschlossenen Zustand des Behälters bevorzugt in die Aufnahme bzw. Aufnahmebohrung eingebracht, vorzugsweise eingeschraubt. Das Fixierungselement bzw. die Schraube kann beispielsweise als Deckelschraube, als Gewindebolzen, als Madenschraube oder dergleichen ausgebildet sein. Die Aufnahme bzw. Aufnahmebohrung und/oder das Fixierungselement durchgreift bzw. durchgreifen das Verriegelungselement zweckmäßigerweise in axialer Richtung des Behälters. Es empfiehlt sich, dass die zumindest eine Aufnahme bzw. die Aufnahmebohrung sich in axialer Richtung des Behälters erstreckt, wenn das zumindest eine Verriegelungselement in der zumindest einen Verriegelungsausnehmung angeordnet ist. Wenn gemäß bevorzugter Ausführungsform die Aufnahme bzw. die Aufnahmebohrung das Verriegelungselement in axialer Richtung des Behälters durchgreift, insbesondere vollständig durchgreift, kann zweckmäßigerweise auch das Fixierungselement bzw. die Schraube im vollständig verschlossenen Zustand des Behälters die Aufnahme bzw. die Aufnahmebohrung durchgreifen, bzw. vollständig durchgreifen. Es liegt dann im Rahmen der Erfindung, dass das Fixierungselement mit dem Boden der Verriegelungsausnehmung wechselwirkt und insbesondere den Boden der Verriegelungsausnehmung kraftbeaufschlagt. Empfohlenermaßen wird beim Einschrauben des Fixierungselementes bzw. der Schraube die rotatorische Bewegung in eine translatorische Bewegung umgewandelt und sobald das Fixierungselement bzw. die Schraube den Boden der Verriegelungsausnehmung berührt, wirkt zweckmäßigerweise eine Kraft bzw. Axialkraft auf den Boden der Verriegelungsausnehmung. Es ist bevorzugt, dass die von dem Fixierungselement bzw. der Schraube auf den Boden der Verriegelungsausnehmung ausgeübte Kraft das Verriegelungselement in seiner Formschlussposition fixiert und/oder die zumindest eine Hauptdichtung des Behälters kraftbeaufschlagt bzw. verpresst und insbesondere axialkraftbeaufschlagt. Durch diese Kraftbeaufschlagung bzw. Verpressung ergibt sich eine ausgezeichnete Dichtfunktion der Hauptdichtung.

Es ist bevorzugt, dass an der einem Boden der Verriegelungsausnehmung zugeordneten Seite des Fixierungselementes ein Stützfuß angeordnet ist. Der Stützfuß ist bevorzugt im vollständig verschlossenen Zustand des Behälters zwischen dem Fixierungselement und dem Boden der Verriegelungsausnehmung vorgesehen und wechselwirkt insbesondere mit dem Boden der Verriegelungsausnehmung. Der empfohlenermaßen an dem dem Boden der Verriegelungsausnehmung zugeordneten Seite des Fixierungselementes angeordnete Stützfuß dient somit zweckmäßigerweise zur Kraftübertragung zwischen der von dem Fixierungselement auf den Boden der Verriegelungsausnehmung ausgeübten Kraft bzw. Axialkraft und sorgt insbesondere für eine bessere Verteilung dieser Kraft. Zweckmäßigerweise ist der Stützfuß somit zwischen dem Ende des Fixierungselementes und dem Boden der Verriegelungsausnehmung zwischengeschaltet. Es hat sich bewährt, dass der Stützfuß in direktem Kontakt zu dem Boden der Verriegelungsausnehmung steht. Grundsätzlich könnte zwischen dem Stützfuß und dem Boden der Verriegelungsausnehmung aber auch ein Zwischenelement angeordnet sein. Die von dem Fixierungselement bzw. der Schraube mit dem daran angeordneten Stützfuß vorzugsweise auf den Boden der Verriegelungsausnehmung wirkende Kraft bzw. Axialkraft fixiert bevorzugt das Verriegelungselement in seiner Formschlussposition und/oder verpresst zweckmäßigerweise die Hauptdichtung des Behälters. Es ist bevorzugt, dass die Hauptdichtung in Richtung quer, insbesondere senkrecht zu der Längsachse des Behälters, vorzugsweise in radialer Richtung des Behälters unterhalb des Fixierungselementes und insbesondere unterhalb des Stützfußes angeordnet ist und somit in besonders vorteilhafter Weise axialkraftbeaufschlagt wird. Dieser Ausführungsform liegt die Erkenntnis zugrunde, dass die zwischen dem Behälterdeckel und dem Behältermantel angeordnete Dichtung im Rahmen der Erfindung nahezu ausschließlich bzw. ausschließlich axialkraftbeaufschlagt wird. Dies ermöglicht eine sehr kompakte Bauform des erfindungsgemäßen Behälters. Durch die erfindungsgemäße Ausgestaltung des Verriegelungselementes mit dem zumindest einen Fixierungselement kann dennoch eine hervorragende Verpressung der Hauptdichtung erfolgen und daraus ergibt sich eine hervorragende Dichtfunktion.

Erfindungsgemäß ist eine formschlüssige Verbindung zwischen dem Behälterdeckel und dem Behältermantel vorgesehen. Gemäß einer sehr bevorzugten Ausführungsform des erfindungsgemäßen Behälters ist der Behälterdeckel im vollständig verschlossenen Zustand des Behälters schweißverbindungsfrei mit dem Behältermantel verbunden.

Nach einer besonders bevorzugten Ausführungsform der Erfindung beträgt das Verhältnis des Durchmessers d des Behälters zur Wandstärke s des Behältermantels zumindest 20:1, vorzugsweise zumindest 40:1, bevorzugt zumindest 60:1, besonders bevorzugt zumindest 80:1 und ganz besonders bevorzugt zumindest 100:1, beispielsweise zumindest 120:1. Empfohlenermaßen beträgt das Verhältnis des Durchmessers d des Behälters zur Wandstärke s des Behältermantels zwischen 40:1 und 100:1, vorzugsweise zwischen 50:1 und 95:1, bevorzugt zwischen 60:1 und 90:1. Durchmesser d des Behälters meint im Rahmen der Erfindung insbesondere den größten Durchmesser des Behälters quer, insbesondere senkrecht zur Längsachse des Behälters. Wandstärke s des Behältermantels meint in diesem Zusammenhang insbesondere die Wandstärke des Behältermantels in dem Bereich unterhalb der Deckelanordnung, sodass an den Innenumfang angeformte Absätze im Bereich der Deckelanordnung nicht zu der Wandstärke des Behältermantels zählen. Im Bereich unterhalb der Deckelanordnung meint Wandstärke des Behältermantels dann insbesondere die größte Wandstärke des Behältermantels.

Zur Lösung des technischen Problems lehrt die Erfindung weiterhin ein Behälteraggregat mit einem vorstehend beschriebenen Behälter und einem Transport- und/oder Lagerbehälter, wobei der Behälter ein mit abgebrannten Brennelementen beladener Kanister ist, der in dem Transport- und/oder Lagerbehälter aufgenommen ist, wobei der Transport- und/oder Lagerbehälter mit zumindest einem Primärdeckel verschließbar bzw. verschlossen ist und zweckmäßigerweise zusätzlich mit einem über dem Primärdeckel angeordneten Sekundärdeckel verschließbar bzw. verschlossen ist. Der Kanister wird empfohlenermaßen unter Wasser mit den abgebrannten Brennelementen beladen, wobei die Brennelemente von einem in dem Kanister angeordneten Tragkorb aufgenommen werden. Anschließend wird der Kanister zweckmäßigerweise mittels eines Überführungsbehälters zu dem Transport- und/oder Lagerbehälter überführt und in den Transport- und/oder Lagerbehälter eingeführt und dabei empfohlenermaßen vertikal gehandhabt. In der Folge wird der Transport- und/oder Lagerbehälter bevorzugt mit dem Primärdeckel und dem Sekundärdeckel verschlossen und einer Zwischenlagerung oder Endlagerung zugeführt.

Es ist grundsätzlich auch möglich, dass es sich bei dem erfindungsgemäßen Behälter bereits um einen Transport- und/oder Lagerbehälter handelt, wobei der Behälterdeckel dann der Primärdeckel des Transport- und/oder Lagerbehälters ist. Empfohlenermaßen wird der Primärdeckel mit den erfindungsgemäßen Maßnahmen formschlüssig an dem Behältermantel des Transport- und/oder Lagerbehälters fixiert. Der Transport- und/oder Lagerbehälter wird nach dem formschlüssigen Verbinden des Primärdeckels zweckmäßigerweise mit einem zusätzlichen Sekundärdeckel verschlossen.

Der Erfindung liegt die Erkenntnis zugrunde, dass der erfindungsgemäße Behälter aufgrund der erfindungsgemäßen Maßnahmen einfach und funktionssicher verschließbar ist und zwar insbesondere aufgrund der Formschlusswechselwirkung der Formschlussfortsätze mit den Formschlussausnehmungen verschließbar ist. In vorteilhafter Weise ist die Verbindung zwischen dem Behälterdeckel und dem Behältermantel schweißverbindungsfrei ausgebildet. Wenn der Behälter beispielsweise ein Kanister ist, ist dennoch eine wenig aufwendige Handhabung des Kanisters möglich. Weiterhin zeichnet sich der erfindungsgemäße Behälter dadurch aus, dass die Verbindung zwischen Behälterdeckel und Behältermantel auch den Lasten bei der Überführung des Kanisters z. B. in einen Transport- und/oder Lagerbehälter problemlos standhält. Hervorzuheben ist weiterhin, dass die Verbindung zwischen Behälterdeckel und Behältermantel problemlos wieder geöffnet werden kann. Es ist somit ein zerstörungsfreies Wiederöffnen des Behälters bzw. Kanisters möglich. Dies wird durch die Überführbarkeit des zumindest einen Verriegelungselementes von einer Formschlussposition in eine Öffnungsposition und insbesondere durch die vorzugsweise vorgesehene Verschiebbarkeit des zumindest einen Verriegelungselementes in der zumindest einen Verriegelungsausnehmung erreicht. In der Formschlussposition des Verriegelungselementes ist die Verbindung zwischen dem Behälterdeckel und dem Behältermantel aufgrund der Formschlusswechselwirkung hergestellt. In der Öffnungsposition der Verriegelungselemente ist eine Öffnung des Behälters bzw. Kanisters durch Entfernung des Deckels möglich. Wenn sich das zumindest eine Verriegelungselement in der Formschlussposition befindet, kann das Verriegelungselement durch zumindest ein Halteelement und/oder zumindest ein Fixierungselement in dieser Formschlussposition gehalten bzw. fixiert werden, sodass ein vollständiger und sicherer Verschluss des Behälters realisiert werden kann. Das zumindest eine Halteelement kann zweckmäßigerweise wieder aus der Verriegelungsausnehmung entfernt werden und dann ist die Überführung des zumindest einen Verriegelungselementes von der Formschlussposition in die Öffnungsposition wieder möglich. Es ist weiterhin zu betonen, dass die erfindungsgemäßen Maßnahmen insbesondere für Behälter bzw. Kanister mit im Vergleich zum Durchmesser geringer Wandstärke vorteilhaft sind. Derartige Behälter bzw. Kanister weisen für eine radial versetzt zu den Verriegelungsmechanismen angeordnete Dichtung nicht genügend Wandstärke auf. Im Rahmen der Erfindung wird die zumindest eine Dichtung in Richtung quer, insbesondere senkrecht zur Längsachse des Behälters, vorzugsweise in radialer Richtung des Behälters unterhalb des Verriegelungselementes und insbesondere unterhalb des bevorzugt in dem Verriegelungselement angeordneten Fixierungselementes vorgesehen. Auf diese Weise wird die Dichtung mit einer durch das Fixierungselement ausgeübten Axialkraft beaufschlagt und somit wird in vorteilhafter Weise sehr platzsparend eine allen Anforderungen genügende Abdichtung des Behälters bzw. Kanisters erreicht. Dabei wird die Dichtung vorzugsweise lediglich bzw. im Wesentlichen lediglich axialkraftbeaufschlagt.

Der erfindungsgemäße Behälter bzw. Kanister erfüllt somit alle Anforderungen im Hinblick auf seine Dichtheit und seine Stabilität gegenüber mechanischen Belastungen, beispielsweise beim Transport bzw. der Überführung des Kanisters und ist dennoch ohne großen Aufwand und insbesondere zerstörungsfrei beliebig zu verschließen und zu öffnen. Die erfindungsgemäßen Maßnahmen werden darüber hinaus mit verhältnismäßig geringem Aufwand realisiert, sodass sowohl die Herstellung, als auch der Einsatz des Behälters bzw. Kanisters sehr wirtschaftlich ist.
- Fig. 1: eine perspektivische Darstellung eines erfindungsgemäßen Behälters,
- Fig. 2: einen Ausschnitt aus der Fig. 1 als perspektivische Explosionsdarstellung,
- Fig. 3: einen Längsschnitt durch den erfindungsgemäßen Behälter im vollständig verschlossenen Zustand,
- Fig. 4A: einen Ausschnitt des Behälters im Schnitt im unverriegelten Zustand des Behälterdeckels,
- Fig. 4B: den Gegenstand gemäß Fig. 4A im verriegelten Zustand des Behälterdeckels und
- Fig. 4C: den Gegenstand gemäß Fig. 4A im vollständig verschlossenen Zustand des Behälters.

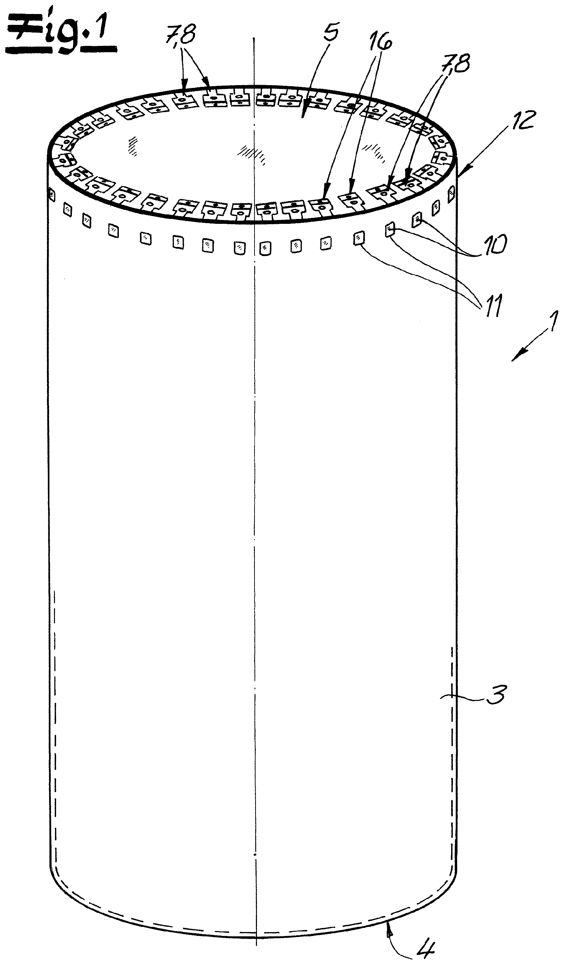

Die Figuren zeigen einen Behälter 1 zur Aufnahme von radioaktiven Abfallstoffen, zweckmäßigerweise und im Ausführungsbeispiel zur Aufnahme von abgebrannten Brennelementen 2. Der Behälter 1 weist einen Behältermantel 3, einen mit dem Behältermantel 3 verbundenen Behälterboden 4 und einen Behälterdeckel 5 auf. Vorzugsweise und im Ausführungsbeispiel gemäß den Figuren weist der Behälterdeckel 5 in seinem deckeloberseitigen Randbereich 6 angeordnete Verriegelungsausnehmungen 7 auf, in denen jeweils ein Verriegelungselement 8 angeordnet ist. Die Verriegelungselemente 8 weisen jeweils zumindest einen in Richtung des Deckelaußenrandes 9 bzw. des Behältermantels 3 orientierten Formschlussfortsatz 10 auf. Im verriegelten Zustand des Behälterdeckels 5 greifen die Formschlussfortsätze 10 jeweils in eine komplementäre Formschlussausnehmung 11 des Behältermantels 3 ein (z. B. Figuren 1, 3, 4B, 4C). Die Formschlussausnehmungen 11 sind im deckelseitigen Randbereich 12 des Behältermantels 3 angeordnet. Bei dem in den Figuren dargestellten Behälter 1 handelt es sich um einen Kanister.

Mit dem Begriff verriegelter Zustand des Behälterdeckels 5 ist im Rahmen der Erfindung insbesondere derjenige Zustand gemeint, in dem die Formschlussfortsätze 10 der Verriegelungselemente 8 in die komplementären Formschlussausnehmungen 11 des Behältermantels 3 eingreifen, sodass eine Formschlusswechselwirkung zwischen den Formschlussfortsätzen 10 und den Formschlussausnehmungen 11 realisiert ist. Zweckmäßigerweise und im Ausführungsbeispiel ist der Behälterdeckel 5 in diesem verriegelten Zustand insbesondere mittels der Verriegelungselemente 8 aufgrund der Formschlusswechselwirkung formschlüssig mit dem Behältermantel 3 verbunden.

Im Rahmen der Erfindung und im Ausführungsbeispiel ist in dem Behälterinnenraum 22 des Behälters 1 ein Tragkorb 23 zur Aufnahme von abgebrannten Brennelementen 2 angeordnet. Zweckmäßigerweise und im Ausführungsbeispiel ist der Behälter 1 zylinderförmig ausgebildet und weist empfohlenermaßen einen kreisrunden Querschnitt auf.

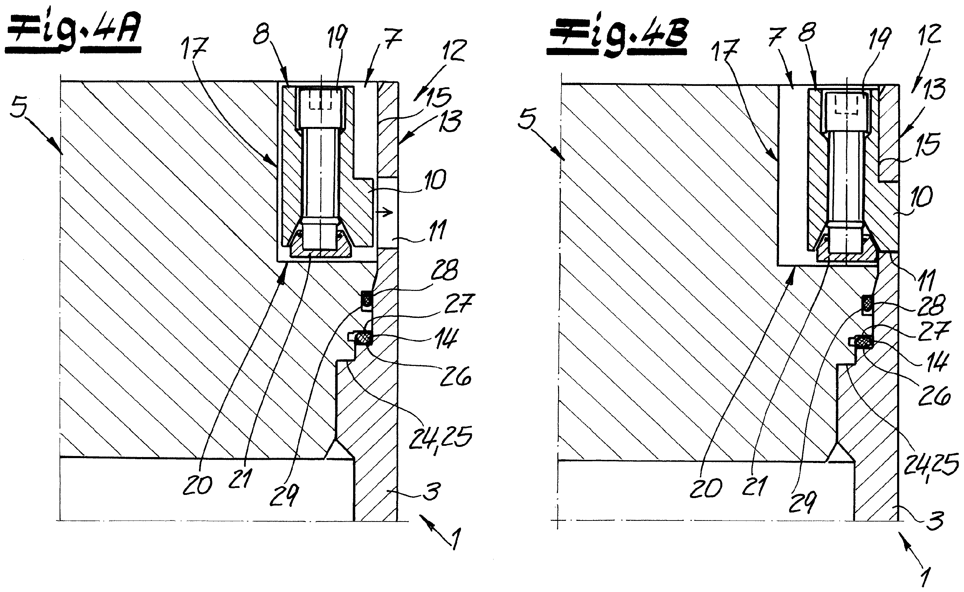

Die Verriegelungselemente 8 sind zweckmäßigerweise und im Ausführungsbeispiel gemäß den Figuren im unverschlossenen Zustand des Behälters 1 radial in Bezug auf die Längsmittelachse L des Behälters 1 in den Verriegelungsausnehmungen 7 verschiebbar. Auf diese Weise sind die Verriegelungselemente 8 bevorzugt und im Ausführungsbeispiel von einer Öffnungsposition in eine Formschlussposition und zurück überführbar (Figuren 4A, 4B). Unverschlossener Zustand des Behälters 1 meint in diesem Zusammenhang insbesondere, dass die Verriegelungselemente 8 noch nicht vollständig in ihrer Formschlussposition fixiert sind (Figuren 4A, 4B). Demgegenüber meint vollständig verschlossener Zustand des Behälters 1 zweckmäßigerweise den Zustand, in dem der Behälterdeckel 5 insbesondere mittels der Verriegelungselemente 8 mit dem Behältermantel 3 formschlüssig verbunden ist und in dem die Verriegelungselemente 8 in ihrer Formschlussposition fixiert sind (Figuren 1, 3, 4C). Durch die Verschiebung der Verriegelungselemente 8 radial in Bezug auf die Längsmittelachse L des Behälters 1 sind die Verriegelungselemente 8 bevorzugt und im Ausführungsbeispiel von einer Öffnungsposition in eine Formschlussposition und zurück überführbar. In der Öffnungsposition (Fig. 4A) greifen die Formschlussfortsätze 10 der Verriegelungselemente 8 empfohlenermaßen nicht in die komplementären Formschlussausnehmungen 11 des Behältermantels 3 ein. Der Behälterdeckel 5 befindet sich dann im unverriegelten Zustand. In der Formschlussposition greifen die Formschlussfortsätze 10 der Verriegelungselemente 8 nach der Verschiebung der Verriegelungselemente 8 in den Verriegelungsausnehmungen 7 in Richtung der Behälteraußenseite formschlüssig in die komplementären Formschlussausnehmungen 11 ein und befinden sich dann in ihrer Formschlussposition (Fig. 4B). Der Behälterdeckel 5 befindet sich dann im verriegelten Zustand. Grundsätzlich kann sich der Behälter 1 bereits durch die Überführung der Verriegelungselemente 8 in die Formschlussposition und somit im verriegelten Zustand des Behälterdeckels 5 im vollständig verschlossenen Zustand befinden. Bevorzugt und im Ausführungsbeispiel gemäß den Figuren sind aber zusätzliche Halteelemente 16 und Fixierungselemente 19 vorgesehen, die die Verriegelungselemente 8 in ihren Formschlusspositionen halten bzw. fixieren und den vollständig verschlossenen Zustand des Behälters 1 herstellen. (Figuren 1, 3, 4C).

Zweckmäßigerweise und im Ausführungsbeispiel gemäß den Figuren weist der Behälter 1 einen den Innenumfang des Behältermantels 3 umlaufenden Auflageabsatz 24 auf, auf den der Behälterdeckel 5 aufgesetzt wird. Der Auflageabsatz 24 ist bevorzugt und im Ausführungsbeispiel im deckelseitigen Randbereich 12 des Behältermantels 3 und unterhalb der Formschlussausnehmungen 11 angeordnet. Der Behälterdeckel 5 weist empfohlenermaßen und im Ausführungsbeispiel eine komplementäre Auflageschulter 25 zur Auflage auf dem Auflageabsatz 24 auf. Dies ist etwa in der Fig. 4A zu erkennen.

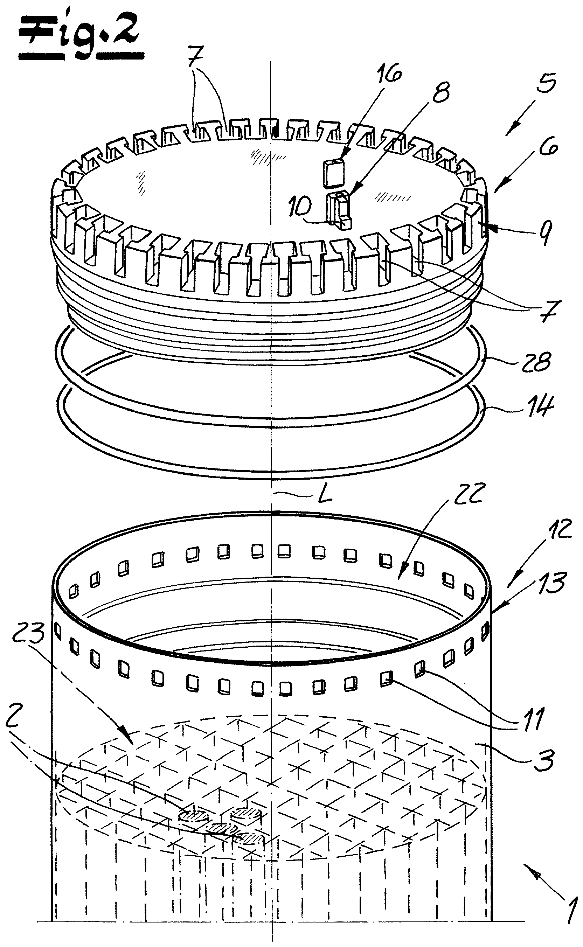

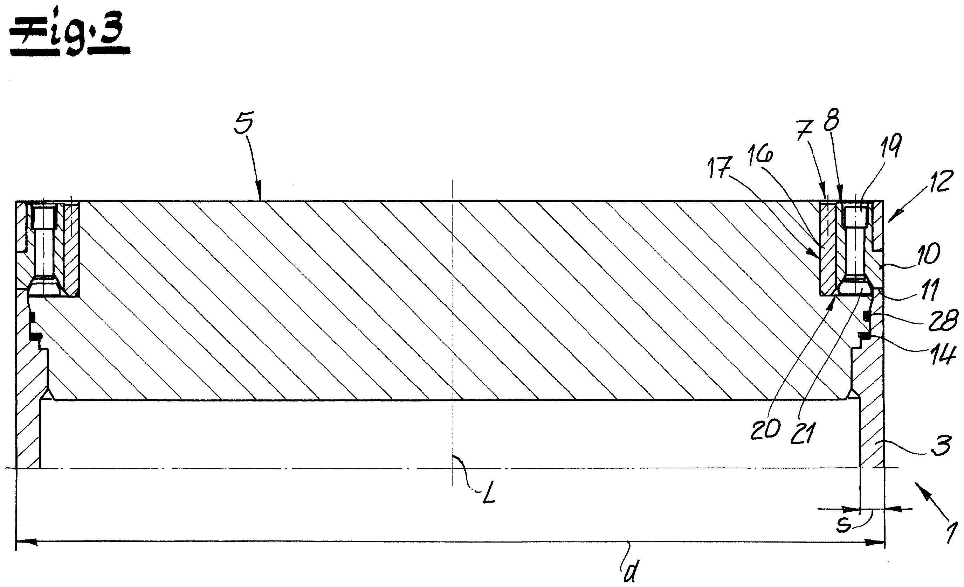

Über den Umfang des Behälterdeckels 5 verteilt - vorzugsweise und dem Ausführungsbeispiel gleichmäßig verteilt - ist im deckeloberseitigen Randbereich 6 eine Mehrzahl von Verriegelungsausnehmungen 7, bevorzugt und im Ausführungsbeispiel mindestens vierzehn Verriegelungsausnehmungen 7 vorgesehen. In den zumindest vierzehn Verriegelungsausnehmungen 7 ist vorzugsweise und im Ausführungsbeispiel jeweils ein Verriegelungselement 8 angeordnet. Dementsprechend ist auch eine Mehrzahl von Formschlussausnehmungen 11, vorzugsweise zumindest vierzehn Formschlussausnehmungen 11, vorgesehen, wobei die Formschlussausnehmungen 11 über den Umfang des Behältermantels 3 verteilt, insbesondere und im Ausführungsbeispiel gleichmäßig verteilt angeordnet sind. Die Formschlussfortsätze 10 sind empfohlenermaßen und im Ausführungsbeispiel einstückig an die Verriegelungselemente 8 angeformt und jeweils als in Richtung des Behältermantels 3 vorkragender Vorsprung ausgebildet. Die Verriegelungselemente 8 mit den daran angeformten Formschlussfortsätzen 10 sind bevorzugt und im Ausführungsbeispiel im Querschnitt L-förmig ausgebildet (Fig. 3). Die Formschlussfortsätze 10 sind im Ausführungsbeispiel in einer Ansicht als rechteckförmige Vorsprünge mit abgerundeten Ecken ausgestaltet (Fig. 2).

Gemäß einer sehr empfohlenen Ausführungsform und im Ausführungsbeispiel sind die Verriegelungsausnehmungen 7 entlang ihrer gesamten vertikalen Höhe bzw. im Wesentlichen entlang ihrer gesamten vertikalen Höhe zu dem Deckelaußenrand 9 bzw. zu dem Behältermantel 3 hin offen ausgebildet. Dies ist z. B. in den Figuren 2 und 3 zu erkennen. Die Verriegelungsausnehmungen 7 sind somit zweckmäßigerweise im Querschnitt L-förmig bzw. im Wesentlichen L-förmig ausgebildet, wobei die offene Seite der L-Form in Richtung des Deckelaußenrandes 9 orientiert ist. Die Formschlussausnehmungen 11 sind im Ausführungsbeispiel als den Behältermantel 3 durchgreifende Formschlussöffnungen ausgebildet. Im verriegelten Zustand des Behälterdeckels 5 ragen die Formschlussfortsätze 10 nicht über die Außenseite 13 des Behältermantels 3 hinaus und fluchten empfohlenermaßen und im Ausführungsbeispiel mit der Außenseite 13 des Behältermantels 3. Dies ist insbesondere in der Fig. 4B zu erkennen.

Empfohlenermaßen und im Ausführungsbeispiel sind weiterhin zusätzliche Dichtungsmaßnahmen für die Abdichtung zwischen dem Behälterdeckel 5 und dem Behältermantel 3 vorgesehen. Dazu ist zweckmäßigerweise und im Ausführungsbeispiel zwischen dem Behältermantel 3 und dem Behälterdeckel 5 zumindest eine Hauptdichtung 14 angeordnet, die im Ausführungsbeispiel gemäß den Figuren als den Innenumfang des Behältermantels 3 und den Außenumfang des Behälterdeckels 5 vollständig umlaufender Dichtungsring ausgebildet ist. Zweckmäßigerweise ist die Hauptdichtung 14 eine Metalldichtung, die bevorzugt auf Basis zumindest eines Metalls ausgebildet ist. Es ist bevorzugt, dass die Hauptdichtung 14 in radialer Richtung des Behälters 1 unterhalb der Verriegelungselemente 8 angeordnet ist. Im Ausführungsbeispiel gemäß den Figuren ist die Hauptdichtung 14 zudem auch in axialer Richtung des Behälters 1 unterhalb der Verriegelungselemente 8 angeordnet. Dies ist beispielsweise in den Figuren 3 und 4A bis 4C dargestellt. Vorzugsweise und im Ausführungsbeispiel gemäß den Figuren ist die Hauptdichtung 14 zwischen einem Hauptdichtungsabsatz 26 des Behältermantels 3 und einer Hauptdichtungsschulter 27 des Behälterdeckels 5 angeordnet bzw. zwischengeschaltet. Weiterhin bevorzugt und im Ausführungsbeispiel ist eine Prüfdichtung 28 vorgesehen, die als Prüfdichtungsring ausgebildet ist und zweckmäßigerweise in einer Prüfdichtungsnut 29 angeordnet ist, die in axialer Richtung des Behälters 1 oberhalb der Hauptdichtung 14 und unterhalb der Verriegelungselemente 8 vorgesehen ist.

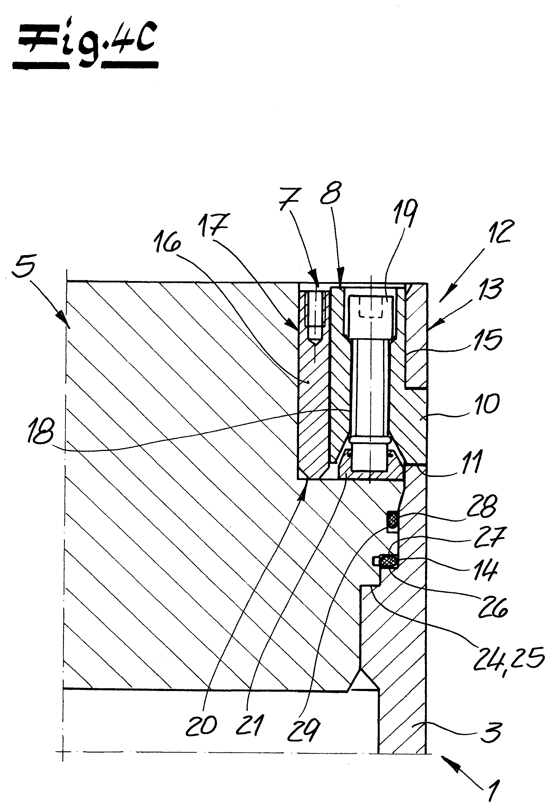

Besonders bevorzugt und im Ausführungsbeispiel liegen die Verriegelungselemente 8 im verriegelten Zustand des Behälterdeckels 5 an ihrer dem Deckelaußenrand 9 bzw. dem Behältermantel 3 zugeordneten Seite an der Innenseite 15 des Behältermantels 3 an (Fig. 4B). Gemäß einer ganz besonders bevorzugten Ausführungsform des erfindungsgemäßen Behälters 1 ist in den Verriegelungsausnehmungen 7 jeweils ein Halteelement 16 vorgesehen, das die Verriegelungselemente 8 im vollständig verschlossenen Zustand des Behälters 1 in ihrer Formschlussposition hält und zwischen den Verriegelungselementen 8 und einer Anschlagschulter 17 der Verriegelungsausnehmungen 7 angeordnet, zweckmäßigerweise und im Ausführungsbeispiel formschlüssig angeordnet bzw. eingepasst ist. In der Formschlussposition der Verriegelungselemente 8 ist jeweils zwischen dem Verriegelungselement 8 und der Anschlagschulter 17 der Verriegelungsausnehmung 7 ein Spalt vorhanden (Fig. 4B). Die Anschlagschulter 17 bildet zweckmäßigerweise in radialer Richtung von der Behälteraußenseite zur Behälterinnenseite den rückseitigen Abschluss der Verriegelungsausnehmung 7. Das Halteelement 16 ist zweckmäßigerweise und im Ausführungsbeispiel (Figuren 3 und 4C) jeweils in dem Spalt zwischen der Rückseite des Verriegelungselementes 8 und der Anschlagschulter 17 formschlüssig angeordnet bzw. eingepasst. Somit sind die Halteelemente 16 empfohlenermaßen und im Ausführungsbeispiel im vollständig verschlossenen Zustand des Behälters (Figuren 1, 3, 4C) in Richtung von der Behälteraußenseite zur Behälterinnenseite hinter den Verriegelungselementen 8 angeordnet. Im Ausführungsbeispiel gemäß den Figuren sind die Halteelemente 16 im Übrigen im vollständig verschlossenen Zustand des Behälters in den Verriegelungsausnehmungen 7 durch Verschraubung fixiert. Zur Wiederöffnung des Behälters 1 können die Halteelemente 16 wieder aus den Verriegelungsausnehmungen entfernt werden. Anschließend können die Verriegelungselemente 8 von der Formschlussposition in die Öffnungsposition gebracht werden.

Gemäß einer besonders bevorzugten Ausführungsform des erfindungsgemäßen Behälters 1 und im Ausführungsbeispiel weisen die Verriegelungselemente 8 jeweils eine Aufnahmebohrung 18 für ein Fixierungselement 19 auf. Bevorzugt und im Ausführungsbeispiel erstrecken sich die Aufnahmebohrungen 18 in axialer Richtung des Behälters 1, wenn die Verriegelungselemente 8 in den jeweiligen Verriegelungsausnehmungen 7 angeordnet sind. Das Fixierungselement 19 ist im Ausführungsbeispiel gemäß den Figuren als Schraube ausgebildet. Im vollständig verschlossenen Zustand des Behälters ist das Fixierungselement 19 zweckmäßigerweise in die Aufnahmebohrung 18 eingeschraubt. Das Fixierungselement 19 und die Aufnahmebohrung 18 durchgreifen empfohlenermaßen und im Ausführungsbeispiel das Verriegelungselement 8 bzw. durchgreifen das Verriegelungselement 8 vollständig. Es ist weiterhin bevorzugt, dass an der dem Boden 20 der Verriegelungsausnehmung 7 zugeordneten Seite der Fixierungselemente 19 jeweils ein Stützfuß 21 angeordnet ist. Im vollständig verschlossenen Zustand des Behälters 1 sind diese Stützfüße 21 empfohlenermaßen und im Ausführungsbeispiel zwischen den Fixierungselementen 19 und dem jeweiligen Boden 20 der Verriegelungsausnehmungen 7 angeordnet und wechselwirken insbesondere mit dem Boden 20 der Verriegelungsausnehmungen 7. Beim Einschrauben des Fixierungselementes 19 bzw. der Schraube wird die rotatorische in eine translatorische Bewegung umgewandelt und sobald der Stützfuß 21 des Fixierungselementes 19 den Boden 20 der jeweiligen Verriegelungsausnehmung 7 berührt, wirkt eine Axialkraft auf den Boden 20 der Verriegelungsausnehmung 7, die bevorzugt das Verriegelungselement 8 in der Formschlussposition hält und vorzugsweise und im Ausführungsbeispiel die Hauptdichtung 14 des Behälters 1 kraftbeaufschlagt bzw. verpresst (Figuren 3, 4C). Der Stützfuß 21 dient dabei zur gleichmäßigen Kraftübertragung auf den Boden 20 der Verriegelungsausnehmung 7. Die Hauptdichtung 14 ist im Übrigen vorzugsweise und im Ausführungsbeispiel in radialer Richtung des Behälters 1 unterhalb der Stützfüße 21 angeordnet und wird somit zweckmäßigerweise durch die Stützfüße 21 axialkraftbeaufschlagt. Im vollständig verschlossenen Zustand des Behälters 1 ist der Behälterdeckel 5 schweißverbindungsfrei mit dem Behältermantel 3 verbunden. Zur Wiederöffnung des Behälters 1 werden die Fixierungselemente 19 wieder aus den Aufnahmebohrungen 18 herausgeschraubt bzw. zumindest teilweise herausgeschraubt.

Das Verhältnis des Durchmessers d des Behälters 1 zur Wandstärke s des Behältermantels 3 beträgt zweckmäßigerweise zumindest 40:1. Im Ausführungsbeispiel gemäß den Figuren mag das Verhältnis d/s zumindest 45:1 betragen (Fig. 3). Durchmesser d des Behälters 1 meint hier insbesondere den größten Durchmesser des Behälters 1, quer, insbesondere senkrecht zur Längsachse L des Behälters 1. Wandstärke s des Behältermantels 3 meint in diesem Zusammenhang insbesondere die Wandstärke des Behältermantels 3 in dem Bereich unterhalb der Deckelanordnung, sodass an den Innenumfang angeformte Absätze, beispielsweise der Auflageabsatz 24 und der Hauptdichtungsabsatz 26 nicht zu der Wandstärke des Behältermantels 3 zählen. Im Bereich unterhalb der Deckelanordnung meint Wandstärke des Behältermantels 3 dann insbesondere die größte Wandstärke des Behältermantels 3.

## Patentansprüche

1. Behälter (1) zur Aufnahme von radioaktiven Abfallstoffen, insbesondere zur Aufnahme von abgebrannten Brennelementen (2), mit einem Behältermantel (3), mit einem mit dem Behältermantel (3) verbundenen Behälterboden (4) und mit zumindest einem Behälterdeckel (5), wobei der Behälterdeckel (5) zumindest eine im deckeloberseitigen Randbereich (6) angeordnete Verriegelungsausnehmung (7) aufweist, wobei in der Verriegelungsausnehmung (7) zumindest ein Verriegelungselement (8) angeordnet ist bzw. angeordnet werden kann, **dadurch gekennzeichnet, dass**
das Verriegelungselement (8) zumindest einen in Richtung des Behältermantels (3) orientierten Formschlussfortsatz (10) aufweist, der im verriegelten Zustand des Behälterdeckels (5) in eine komplementäre Formschlussausnehmung (11) des Behältermantels (3) eingreift, wobei die Formschlussausnehmung (11) im deckelseitigen Randbereich (12) des Behältermantels (3) angeordnet ist und wobei die zumindest eine Formschlussausnehmung (11) als den Behältermantel (3) durchgreifende Formschlussöffnung ausgebildet ist.

2. Behälter nach Anspruch 1, wobei das Verriegelungselement (8) im unverschlossenen Zustand des Behälters (1) quer, insbesondere senkrecht zur Längsmittelachse (L) des Behälters (1), vorzugsweise in radialer Richtung des Behälters (1) in der Verriegelungsausnehmung (7) verschiebbar ist, sodass es von einer Öffnungsposition in eine Formschlussposition und zurück überführbar ist.

3. Behälter nach einem der Ansprüche 1 oder 2, wobei mindestens zwei, insbesondere mindestens drei, vorzugsweise mindestens vier, bevorzugt mindestens fünf Verriegelungsausnehmungen (7) im deckeloberseitigen Randbereich (6) des Behälterdeckels (5) vorgesehen sind, die über den Umfang des Behälterdeckels (5) verteilt angeordnet sind, vorzugsweise gleichmäßig verteilt angeordnet sind und in denen besonders bevorzugt jeweils zumindest ein Verriegelungselement (8) angeordnet ist bzw. angeordnet werden kann.

4. Behälter nach einem der Ansprüche 1 bis 3, wobei der Behältermantel (3) mindestens zwei, insbesondere mindestens drei, vorzugsweise mindestens vier, bevorzugt mindestens fünf Formschlussausnehmungen (11) aufweist, die über den Umfang des Behältermantels (5) verteilt, vorzugsweise gleichmäßig verteilt, angeordnet sind.

5. Behälter nach einem der Ansprüche 1 bis 4, wobei der zumindest eine Formschlussfortsatz (10) als einstückig an das Verriegelungselement (8) angeformter und vorzugsweise in Richtung des Behältermantels (3) vorkragender Vorsprung ausgebildet ist.

6. Behälter nach einem der Ansprüche 1 bis 5, wobei die zumindest eine Verriegelungsausnehmung (7) zumindest bereichsweise zu einem Deckelaußenrand (9) hin offen ausgebildet ist, vorzugsweise zumindest in dem dem Formschlussfortsatz (10) des Verriegelungselementes (8) zugeordneten Bereich zu dem Deckelaußenrand (9) hin offen ausgebildet ist, und bevorzugt entlang ihrer gesamten vertikalen Höhe bzw. im Wesentlichen entlang ihrer gesamten vertikalen Höhe zu dem Deckelaußenrand (9) hin offen ausgebildet ist.

7. Behälter nacheinem der Ansprüche 1 bis 6, wobei der zumindest eine Formschlussfortsatz (10) im verriegelten Zustand des Behälterdeckels (5) nicht über die Außenseite (13) des Behältermantels (3) hinausragt und insbesondere mit der Außenseite (13) des Behältermantels (3) fluchtet.

8. Behälter nach einem der Ansprüche 1 bis 7, wobei zwischen dem Behältermantel (3) und dem Behälterdeckel (5) zumindest eine Hauptdichtung (14) angeordnet ist, wobei die Hauptdichtung (14) vorzugsweise den Innenumfang des Behältermantels (3) zumindest teilweise, bevorzugt vollständig bzw. im Wesentlichen vollständig umläuft und wobei die Hauptdichtung (14) vorzugsweise in Richtung quer, insbesondere senkrecht zur Längsmittelachse (L) des Behälters (1), bevorzugt in radialer Richtung des Behälters (1), unterhalb des zumindest einen Verriegelungselementes (8) angeordnet ist.

9. Behälter nach einem der Ansprüche 1 bis 8, wobei das zumindest eine Verriegelungselement (8) im verriegelten Zustand des Behälterdeckels (5) an seiner dem Deckelaußenrand (9) bzw. dem Behältermantel (3) zugeordneten Seite mit dem Deckelaußenrand (9) fluchtet und zweckmäßigerweise mit der Innenseite (15) des Behältermantels (3) wechselwirkt, vorzugsweise an der Innenseite (15) des Behältermantels (3) anliegt.

10. Behälter nach einem der Ansprüche 1 bis 9, wobei in der zumindest einen Verriegelungsausnehmung (7) zumindest ein Halteelement (16) angeordnet ist bzw. angeordnet werden kann, das das Verriegelungselement (8) im vollständig verschlossenen Zustand des Behälters (1) in seiner Formschlussposition hält und vorzugsweise zwischen dem Verriegelungselement (8) und einer Anschlagschulter (17) der Verriegelungsausnehmung (7) angeordnet, insbesondere formschlüssig angeordnet, bevorzugt eingepasst ist.

11. Behälter nach einem der Ansprüche 1 bis 10, wobei das zumindest eine Verriegelungselement (8) eine Aufnahme, vorzugsweise eine Aufnahmebohrung (18), für ein Fixierungselement (19), insbesondere für eine Schraube, aufweist, wobei das Fixierungselement (19) im vollständig verschlossenen Zustand des Behälters (1) in die Aufnahme bzw. Aufnahmebohrung (18) eingebracht ist, vorzugsweise eingeschraubt ist und wobei die Aufnahme bzw. Aufnahmebohrung (18) und/oder das Fixierungselement (19) das Verriegelungselement (8) zweckmäßigerweise in axialer Richtung des Behälters (1) durchgreift.

12. Behälter nach Anspruch 11, wobei an der einem Boden (20) der Verriegelungsausnehmung (7) zugeordneten Seite des Fixierungselementes (19) ein Stützfuß (21) angeordnet ist, der im vollständig verschlossenen Zustand des Behälters (1) zwischen dem Fixierungselement (19) und dem Boden (20) der Verriegelungsausnehmung (7) vorgesehen ist und insbesondere mit dem Boden (20) der Verriegelungsausnehmung (7) wechselwirkt.

13. Behälter nach einem der Ansprüche 1 bis 12, wobei der Behälterdeckel (5) im vollständig verschlossenen Zustand des Behälters (1) schweißverbindungsfrei mit dem Behältermantel (3) verbunden ist.

14. Behälter nach einem der Ansprüche 1 bis 13, wobei das Verhältnis des Durchmessers (d) des Behälters (1) zur Wandstärke (s) des Behältermantels (3) zumindest 20:1, vorzugsweise zumindest 40:1, bevorzugt zumindest 60:1, besonders bevorzugt zumindest 80:1 und ganz besonders bevorzugt zumindest 100:1, beispielsweise 120:1 beträgt.

15. Behälter nach einem der Ansprüche 1 bis 14, wobei in dem Behälterinnenraum (22) des Behälters (1) ein Tragkorb (23) zur Aufnahme von abgebrannten Brennelementen (2) angeordnet ist.

16. Behälteraggregat mit einem Behälter (1) nach einem der Ansprüche 1 bis 15 und einem Transport- und/oder Lagerbehälter, wobei der Behälter (1) ein mit abgebrannten Brennelementen (2) beladener Kanister ist, der in dem Transport- und/oder Lagerbehälter aufgenommen ist, wobei der Transport- und/oder Lagerbehälter mit zumindest einem Primärdeckel verschließbar bzw. verschlossen ist und zweckmäßigerweise zusätzlich mit einem über dem Primärdeckel angeordneten Sekundärdeckel verschließbar bzw. verschlossen ist.

## Claims

1. A container (1) for receiving radioactive waste materials, in particular for receiving spent fuel elements (2), with a container casing (3), with a container base (4) connected to the container casing (3) and with at least one container cover (5), wherein the container cover (5) comprises at least one locking recess (7) arranged in the edge region (6) of the upper side of the cover, wherein at least one locking element (8) is arranged or can be arranged in the locking recess (7), **characterised in that**
the locking element (8) comprises at least one formfitting protrusion (10) which is orientated in the direction of the container casing (3) and which engages in a complementary formfitting recess (11) of the container casing (3) in the locked state of the container cover (5), wherein the formfitting recess (11) is arranged in the cover-side edge region (12) of the container casing (3) and wherein the at least one formfitting recess (11) is constituted as a formfitting opening engaging through the container casing (3).

2. The container according to claim 1, wherein the locking element (8) in the unlocked state of the container (1) can be displaced in the locking recess (7) obliquely, in particular perpendicular to a longitudinal central axis (L) of the container (1), preferably in the radial direction of the container (1), so that it can be transferred from an open position into a formfitting position and back.

3. The container according to any one of claims 1 or 2, wherein at least two, in particular at least three, preferably at least four, preferably at least five locking recesses (7) are provided in the edge region (6) of the upper side of the container cover (5), which are distributed around the circumference of the container cover (5), preferably distributed uniformly, and in which particularly preferably at least one locking element (8) is arranged or can be arranged in each case.

4. The container according to any one of claims 1 to 3, wherein the container casing (3) comprises at least two, in particular at least three, preferably at least four, preferably at least five formfitting recesses (11) which are distributed around the circumference of the container casing (5), preferably distributed uniformly.

5. The container according to any one of claims 1 to 4, wherein the at least one formfitting protrusion (10) is constituted as a protrusion formed integrally on the locking element (8) and preferably jutting out in the direction of the container casing (3).

6. The container according to any one of claims 1 to 5, wherein the at least one the locking recess (7) is constituted open at least in sections towards a cover outer edge (9), preferably constituted open towards the cover outer edge (9) at least in the region corresponding to the formfitting protrusion (10) of the locking element (8) and preferably constituted open along its entire vertical height or essentially along its entire vertical height towards the cover outer edge (9) .

7. The container according to any one of claims 1 to 6, wherein the at least one formfitting protrusion (10) in the locked state of the container cover (5) does not project beyond the outer side (13) of the container casing (3) and in particular is flush with the outer side (13) of the container casing (3).

8. The container according to any one of claims 1 to 7, wherein at least one main seal (14) is arranged between the container casing (3) and the container cover (5), wherein the main seal (14) preferably runs at least partially, preferably completely or essentially completely, around the inner circumference of the container casing (3), and wherein the main seal (14) is preferably arranged in the direction obliquely, in particular perpendicular to the longitudinal central axis (L) of the container (1), preferably in the radial direction of the container (1), beneath the at least one locking element (8).

9. The container according to any one of claims 1 to 8, wherein the at least one locking element (8) in the locked state of the container cover (5) is flush at its side corresponding to the cover outer edge (9) or the container casing (3) with the cover outer edge (9) and expediently interacts with the inner side (15) of the container casing (3), preferably abuts against the inner side (15) of the container casing (3).

10. The container according to any one of claims 1 to 9, wherein at least one holding element (16) is arranged or can be arranged in the at least one locking recess (7), which holds the locking element (8) in its formfitting position in the completely closed state of the container (1) and is preferably arranged, arranged in particular in a formfitting manner, preferably fitted, between the locking element (8) and a stop shoulder (17) of the locking recess (7).

11. The container according to any one of claims 1 to 10, wherein the at least one locking element (8) comprises a receptacle, preferably a locating bore (18), for a fixing element (19), in particular for a screw, wherein the fixing element (19) is introduced, preferably screwed into the receptacle or locating bore (18) in the completely closed state of the container (1), and wherein the receptacle or locating bore (18) and/or the fixing element (19) expediently engages through the locking element (8) in the axial direction of the container (1).

12. The container according to claim 11, wherein a supporting foot (21) is arranged at the side of the fixing element (19) corresponding to a bottom (20) of the locking recess (7), which supporting foot (21) is provided in the completely closed state of the container (1) between the fixing element (19) and the bottom (20) of the locking recess (7) and interacts in particular with the bottom (20) of the locking recess (7).

13. The container according to any one of claims 1 to 12, wherein the container cover (5) in the completely closed state of the container (1) is connected to the container casing (3) free from weld joints.

14. The container according to any one of claims 1 to 13, wherein the ratio of the diameter (d) of the container (1) to the wall thickness (s) of the container casing (3) amounts to at least 20:1, preferably at least 40:1, preferably at least 60:1, particularly preferably at least 80:1, and very particularly preferably at least 100:1, for example 120:1.

15. The container according to any one of claims 1 to 14, wherein a carrier basket (23) for receiving spent fuel elements (2) is arranged in the container interior (22) of the container (1).

16. A container assembly unit with a container (1) according to any one of claims 1 to 15 and a transport and/or storage container, wherein the container (1) is a canister loaded with spent fuel elements (2), which is received in the transport and/or storage container, wherein the transport and/or storage container can be closed or is closed with at least one primary cover and can be or is also expediently closed with a secondary cover arranged over the primary cover.

## Revendications

1. Récipient (1) pour la réception de déchets radioactifs, en particulier pour la réception d'éléments de combustion brûlés (2), comprenant une enveloppe de récipient (3), un fond de récipient (4) relié à l'enveloppe de récipient (3) et au moins un couvercle de récipient (5), dans lequel le couvercle de récipient (5) présente au moins un évidement de verrouillage (7) disposé dans une région de bord côté supérieur du couvercle (6), dans lequel au moins un élément de verrouillage (8) est disposé ou peut être disposé dans l'évidement de verrouillage (7), **caractérisé en ce que**
l'élément de verrouillage (8) présente au moins un prolongement à complémentarité de forme (10) orienté dans la direction de l'enveloppe de récipient (3), lequel s'engage dans un évidement à complémentarité de forme (11) complémentaire de l'enveloppe de récipient (3) dans l'état verrouillé du couvercle de récipient (5), dans lequel l'évidement à complémentarité de forme (11) est disposé dans la région de bord côté couvercle (12) de l'enveloppe de récipient (3) et dans lequel l'au moins un évidement à complémentarité de forme (11) est conçu comme une ouverture à complémentarité de forme traversant l'enveloppe de récipient (3).

2. Récipient selon la revendication 1, dans lequel, dans l'état non fermé du récipient (1), l'élément de verrouillage (8) peut être déplacé transversalement dans l'évidement de verrouillage (7), en particulier perpendiculairement à l'axe médian longitudinal (L) du récipient (1), de préférence dans la direction radiale du récipient (1), de manière à pouvoir être transféré d'une position d'ouverture vers une position à complémentarité de forme et inversement.

3. Récipient selon l'une des revendications 1 ou 2, dans lequel il est prévu au moins deux, en particulier au moins trois, avantageusement au moins quatre, de préférence au moins cinq évidements de verrouillage (7) dans la région de bord côté supérieur du couvercle (6) du couvercle de récipient (5), lesquels sont disposés de manière à être répartis sur le pourtour du couvercle de récipient (5), de préférence disposés de manière à être répartis uniformément et dans lesquels, de façon particulièrement préférée, au moins un élément de verrouillage (8) est disposé ou peut être disposé respectivement.

4. Récipient selon l'une des revendications 1 à 3, dans lequel l'enveloppe de récipient (3) présente au moins deux, en particulier au moins trois, avantageusement au moins quatre, de préférence au moins cinq évidement à complémentarité de forme (11), lesquels sont disposés de manière à être répartis sur le pourtour de l'enveloppe de récipient (3), de préférence disposés de manière à être répartis uniformément.

5. Récipient selon l'une des revendications 1 à 4, dans lequel l'au moins un prolongement à complémentarité de forme (10) est conçu comme une saillie formée d'un seul tenant sur l'élément de verrouillage (8) et faisant saillie de préférence dans la direction de l'enveloppe de récipient (3).

6. Récipient selon l'une des revendications 1 à 5, dans lequel l'au moins un évidement de verrouillage (7) est conçu de manière à être ouvert au moins par endroits vers un bord extérieur de couvercle (9), de préférence de manière à être ouvert vers le bord extérieur de couvercle (9) au moins dans la région correspondant au prolongement à complémentarité de forme (10) de l'élément de verrouillage (8), et avantageusement de manière à être ouvert vers le bord extérieur de couvercle (9) le long de toute sa hauteur verticale ou quasiment le long de toute sa hauteur verticale.

7. Récipient selon l'une des revendications 1 à 6, dans lequel l'au moins un prolongement à complémentarité de forme (10) ne fait pas saillie au-delà du côté extérieur (13) de l'enveloppe de récipient (3) dans l'état verrouillé du couvercle de récipient (5) et affleure en particulier avec le côté extérieur (13) de l'enveloppe de récipient (3).

8. Récipient selon l'une des revendications 1 à 7, dans lequel au moins un moyen d'étanchéité principal (14) est disposé entre l'enveloppe de récipient (3) et le couvercle de récipient (5), dans lequel le moyen d'étanchéité principal (14) entoure avantageusement le pourtour intérieur de l'enveloppe de récipient (3) au moins partiellement, de préférence entièrement ou quasiment entièrement et dans lequel le moyen d'étanchéité principal (14) est disposé de préférence transversalement, en particulier perpendiculairement à l'axe médian longitudinal (L) du récipient (1), avantageusement dans la direction radiale du récipient (1), sous l'au moins un élément de verrouillage (8).

9. Récipient selon l'une des revendications 1 à 8, dans lequel, sur son côté correspondant au bord extérieur de couvercle (9) ou à l'enveloppe de récipient (3), l'au moins un élément de verrouillage (8) affleure avec le bord extérieur de couvercle (9) dans l'état verrouillé du couvercle de récipient (5) et interagit avantageusement avec le côté intérieur (15) de l'enveloppe de récipient (3), en s'appliquant de préférence sur le côté intérieur (15) de l'enveloppe de récipient (3).

10. Récipient selon l'une des revendications 1 à 9, dans lequel au moins un élément de maintien (16) est disposé ou peut être disposé dans l'au moins un évidement de verrouillage (7), lequel maintient l'élément de verrouillage (8) dans sa position à complémentarité de forme dans l'état entièrement fermé du récipient (1) et est disposé, en particulier disposé avec complémentarité de forme, de préférence ajusté avantageusement entre l'élément de verrouillage (8) et un épaulement de butée (17) de l'évidement de verrouillage (7).

11. Récipient selon l'une des revendications 1 à 10, dans lequel l'au moins un élément de verrouillage (8) présente un logement, de préférence un alésage de logement (18), pour un élément de fixation (19), en particulier pour une vis, dans lequel l'élément de fixation (19) est introduit dans le logement ou l'alésage de logement (18) dans l'état entièrement fermé du récipient (1) et dans lequel le logement ou l'alésage de logement (18) et/ou l'élément de fixation (19) traverse l'élément de verrouillage (8) avantageusement dans la direction axiale du récipient (1) .

12. Récipient selon la revendication 11, dans lequel un pied d'appui (21) est disposé sur le côté de l'élément de fixation (19) correspondant à un fond (20) de l'évidement de verrouillage (7), lequel est prévu entre l'élément de fixation (19) et le fond (20) de l'évidement de verrouillage (7) dans l'état entièrement fermé du récipient (1) et coopère en particulier avec le fond (20) de l'évidement de verrouillage (7).

13. Récipient selon l'une des revendications 1 à 12, dans lequel le couvercle de récipient (5) est relié à l'enveloppe de récipient (3) sans joint de soudure dans l'état entièrement fermé du récipient (1).

14. Récipient selon l'une des revendications 1 à 13, dans lequel le rapport entre le diamètre (d) du récipient (1) et l'épaisseur de paroi (s) de l'enveloppe de récipient (3) est d'au moins 20:1, avantageusement d'au moins 40:1, de préférence d'au moins 60:1, de façon particulièrement préférentielle d'au moins 80:1 et encore plus préférentiellement d'au moins 100:1, par exemple de 120:1.

15. Récipient selon l'une des revendications 1 à 14, dans lequel un panier de transport (23) destiné à recevoir des éléments combustibles brûlés (2) est disposé dans l'espace intérieur (22) du récipient (1).

16. Ensemble de récipient comprenant un récipient (1) selon l'une des revendications 1 à 15 et un récipient de transport et/ou de stockage, dans lequel le récipient (1) est un bidon chargé d'éléments combustibles brûlés (2), lequel est reçu dans le récipient de transport et/ou de stockage, dans lequel le récipient de transport et/ou de stockage peut être fermé ou est fermé à l'aide d'au moins un couvercle primaire et peut être fermé ou est fermé en outre avantageusement à l'aide d'un couvercle secondaire disposé au-dessus du couvercle primaire.
